# EUROPEAN PATENT APPLICATION

(11) **EP 4 108 501 A1**
(43) Date of publication of application: **28.12.2022**
(21) Application number: 21181838.0
(22) Date of filing: 25.06.2021
(51) Int. Cl.: B60L 7/10, B60L 15/20, B60L 50/53, B60L 58/10, B60L 58/13, B60L 58/12

(54) **METHOD, CONTROLLER AND COMPUTER PROGRAM PRODUCT FOR CONTROLLING AN ON-BOARD ENERGY STORAGE SYSTEM OF A RAIL VEHICLE, ON-BOARD ENERGY STORAGE SYSTEM OF A RAIL VEHICLE AND RAIL VEHICLE**

(71) Applicant: Hitachi Rail Limited, London EC1N2PB (GB)
(72) Inventor: Rosengren, Jonas, London, EC1N2PB (GB)
(74) Representative: MERH-IP Matias Erny Reichl Hoffmann Patentanwälte PartG mbB

(57) **Abstract**

The present subject matter relates to a method, a controller, and a computer program product for controlling an on-board energy storage system of a dual-mode rail vehicle. The dual-mode rail vehicle may comprise a high-voltage system, to draw energy from a high-voltage AC line supply, and an on-board energy storage such as a traction battery. The method may comprise the steps of determining a present value of recoverable energy, receiving a present value of energy stored in an on-board energy storage, adding both values to determine a total energy value, comparing the total energy value with a target energy value, determining a required line current depending on the difference between the target energy value and the total energy value, transmitting a minimum value from the determined required line current and a predetermined maximum line current as line current reference value to a high-voltage system controller, and controlling a line current of the rail vehicle according to the line current reference value.

## Description

The present subject matter relates to a method, a controller, and a computer program product for controlling an on-board energy storage system of a rail vehicle. An on-board energy storage system of a rail vehicle and a rail vehicle are provided as well.

Dual-mode rail vehicles can be used flexibly on electrified and non-electrified rail routes. These rail vehicles comprise a common high-voltage system to be connected to the high-voltage AC line supply supplemented by on-board energy storage such as a traction battery. However, adding a traction battery to an electrified rail vehicle significantly increases the weight and complexity of the electrical system, resulting in higher costs. Therefore, it is desirable to smartly combine the functionality of the high-voltage system and the on-board energy storage system to overcome the aforementioned drawbacks.

There is a need to utilize the functionality of the on-board energy storage system of a dual-mode rail vehicle on electrified routes to reduce the size of the high-voltage system, thereby reducing vehicle weight and cost.

Patent Literature 1 describes a mining haul truck driven by electrical wheel motors which is powered by a trolley power system during an uphill climb. Retard energy captured during braking action on either the uphill climb or downhill descent is stored by an on-board electrical energy storage system. Electrical power is supplied from the on-board electrical energy storage system to reduce the peak power demand on the trolley power system during the uphill climb.

Patent Literature 1: US 8499909 B2

An object of the herein described subject matter is, inter alia, to realize a controller, and a computer program product for controlling an on-board energy storage system of a rail vehicle on electrified route sections, in order to reduce the peak and route mean square (RMS) current required from a high-voltage AC line supply. This in turn allows for a significant downsizing of the rail vehicle's high voltage equipment which not only saves costs but also reduces the weight of the rail vehicle.

The aforementioned object is solved by the subject matter according to the independent claims. Further preferred developments are described in the dependent claims.

According to the subject matter set forth in the appended claims, there is proposed a method for controlling an on-board energy storage system (OBESS) of a rail vehicle by an energy controller. The term "rail vehicle" shall comprise a single rail vehicle, a single or a multiple operating train unit and/or an entire train.

The OBESS may comprise at least one on-board energy storage and an energy storage management system. Preferably, the on-board energy storage may be an electric energy storage. Most preferably, the on-board energy storage may be a traction battery, e.g., a lithium-ion traction battery or any other type of battery suitable to serve as traction battery. The energy storage management system may monitor/manage the energy level and the thermal state/conditions of the traction battery.

The method may firstly determine a present value of recoverable energy based on a mass and a velocity of the rail vehicle. Preferably, the recoverable energy may be the kinetic energy of the rail vehicle/train that can be recovered during electric braking of the rail vehicle. In this context, the term "electric braking" shall be understood to mean that at least one traction motor of the rail vehicle is operated as generator. The present value of the recoverable kinetic energy may be calculated by the energy controller using the mass and the present velocity of the rail vehicle taking into account the transformation losses.

Then the energy controller may receive from the energy storage management system a present value of an energy stored in the on-board energy storage. In other words, the energy controller may receive a present energy level from the energy storage management system. Preferably, the received value may be a current state of charge (SOC) of a traction battery serving as on-board energy storage.

Subsequently, the energy controller may add the present values of recoverable energy and energy stored in the energy storage to determine a total energy. This means that the total energy may represent the energy that is actually stored in the rail vehicle (actual energy state of the rail vehicle), being the sum of recoverable kinetic energy and energy stored in the traction battery.

In a next step the energy controller may compare the calculated total energy value with a target energy value and may determine a required line current from the high-voltage AC line supply depending on the difference between the target energy value and the total energy value. The target energy value may be a predetermined energy level of the energy storage set by the energy storage management system, e.g., the desired SOC of the traction battery at the next stop/station of the rail vehicle. To achieve said desired energy level of the energy storage at the next stop/station of the rail vehicle, a line current required from the high-voltage AC line supply is determined based on the distance of the present total energy value to the target energy value.

Then, the energy controller may transmit a minimum value from the determined required line current and a predetermined maximum line current as line current reference value to a high-voltage system controller. The predetermined maximum line current may be the maximum current which can be transmitted from the high-voltage AC line supply to a traction system of the rail vehicle without risking damage to components of the high voltage equipment due to overload. This means that the determined required line current is transmitted as set point specification (reference value) to the high-voltage controller as long as this current value does not exceed the predetermined maximum line current.

Finally, a high-voltage controller may control the line current from the high-voltage AC line supply to the traction system of the rail vehicle according to the line current reference value. In other words, high-voltage controller may control the line current such that the line current reference value is achieved.

As a result of the above-described method, the energy storage may supply exactly the amount of energy that can be recovered during the rail vehicle braking process, and only as much line current may flow from the high-voltage AC supply to the rail vehicle traction system as is required to reach the desired energy level (target energy value) of the energy storage device at the next stop/station.

The disclosed subject matter enables the reduction of the peak and RMS current required from the high-voltage AC power supply, thereby significantly reducing the size of the high voltage equipment of the rail vehicle.

According to an aspect, the required line current may be determined using a controller. The difference between the target energy value and the total energy value may be used as input value of the controller and the required line current may be determined using a transfer function of the controller. Preferably the controller may be a PI controller or a PID controller. This means that, if the target energy is higher than the actual energy state of the rail vehicle, the controller will strive to increase the input current the high-voltage AC power supply is provided. Thus, deviations from the target energy value can be quickly compensated.

According to an aspect, the present value of recoverable energy based on the mass and the velocity of the rail vehicle may be read out from a characteristic map. This can save computation time to determine the current value of recoverable energy to be used for calculating the input value of the controller. The characteristic map may be determined in advance and stored in a parameter database. The parameter database may be stored in the controller and/or in a separate computer remote from the controller. In this case, the computer storing the parameter database may be connected to the controller via a wired or wireless network connection.

According to an aspect, if a floating root mean square (RMS) value of the line current exceeds a first predetermined line current maximum value, the predetermined line current maximum value is set to the first predetermined line current maximum value. On the other hand, if the floating RMS value of the line current remains below said first predetermined line current maximum value, the predetermined line current maximum value may be set to a second predetermined line current maximum value.

The first predetermined line current maximum value may preferably be limited to the line current which is permanently allowable without causing damage to the components of the high-voltage system (rated line current). This enables long-term protection of the high-voltage equipment from current overload.

According to an aspect, the second predetermined line current maximum value may be higher than the first predetermined line current maximum value. Preferably, the second line current maximum value may be a maximum line current allowable only for a limited time period without causing damage to the components of the high-voltage system. In the present case, the time period may be limited to the time until the floating RMS value of the line current exceeds the first predetermined line current maximum value. This enables the high voltage system to even charge up to its maximum current during short periods in order to rapidly achieve the target energy value.

According to an aspect, the floating root mean square (RMS) value of the line current may be continuously calculated by the energy controller. The floating RMS value may be determined by integrating the present AC line current using a predetermined time constant. The predetermined time constant may preferably be in a range of 10 min to 30 min. This allows for precisely determining the timing at which the line current reference value must be limited to the first predetermined line current maximum value, which may correspond to the rated line current.

According to an aspect, energy recovered during braking of the rail vehicle may be stored in at least one on-board energy storage. This means that, different to common electrically driven rail vehicles, the energy recovered during electric braking is not fed into the high-voltage AC line supply but is stored in the on-board energy storage. Avoiding the regeneration of current into the line supply allows a reduction/simplification of the components used in the high-voltage system of the rail vehicle.

According to the herein described subject matter, there is proposed an energy controller for controlling an on-board energy storage system of a rail vehicle. The energy controller may receive input parameters from a parameter database, an energy storage management system, a rail vehicle controller, a high-voltage controller, and a traction controller, and may perform the method described above.

The parameter database may include characteristic parameters and maps such as mass of the rail vehicle, rated and maximum line current, target energy value, recoverable energy etc., which may be transmitted to the energy controller. The parameter database may be stored in the energy controller or may be located in a separate computer remote from the controller. In the latter case, the computer storing the parameter database may be connected to the energy controller via a wired or wireless network connection.

The energy storage management system may monitor/manage the energy level and the thermal state/conditions of the traction battery and may be connected to the energy controller via a wired or a wireless network connection. Alternatively, the energy storage management system may be incorporated in the energy controller. The energy controller may receive the actual energy level (e.g., SOC of the traction battery), the required energy level (target energy value), the temperature, and further characteristic values of the on-board energy storage from the energy storage management system.

The rail vehicle controller may transmit characteristic values such as the vehicle velocity to the energy controller. It may be arranged remote from the energy controller in the rail vehicle and connected thereto via a wired or a wireless network connection. However, it may also be possible that the rail vehicle controller is incorporated in the energy controller.

The high-voltage controller may control the line current from the high-voltage AC line supply to the traction system of the rail vehicle according to a line current reference value determined by the energy controller. This means that the high-voltage controller may receive the line current reference value from the energy controller and transmit the present value of the line current to the energy controller. The high-voltage controller may be included in the high-voltage system or arranged separately in the rail vehicle. It may be connected to the energy controller via a wired or wireless network connection. Alternatively, the high-voltage controller may be incorporated in the energy controller.

The traction controller may be electrically connected to the energy controller via a wired or wireless network connection and may transmit the required traction energy value to the energy controller. The traction controller may be included in the traction system or may be arranged separately in the rail vehicle. It may also be possible that the traction controller is incorporated
in the energy controller.

According to the herein described subject matter, there is proposed an on-board energy storage system (OBESS) including the above-described energy controller.

The OBESS may further comprise at least one on-board energy storage and at least one cooling system attached to the on-board energy storage. Preferably, the on-board energy storage may be an electric energy storage. Most preferably, the on-board energy storage may be a traction battery, e.g., a lithium-ion traction battery. Any other type of traction battery may also be possible.

The cooling system may be attached to the on-board energy storage and may maintain its desired thermal state by providing appropriate cooling and heating. Heat transfer may be performed using passive air cooling or active liquid cooling. Preferably, the cooling system may include an active liquid cooling capable of cooling and heating the traction battery cells using, e.g., water-glycol mixtures or refrigerants as the heat transfer medium.

Additionally, the OBESS may include an energy storage management system for monitoring/managing an energy level and the thermal state/conditions of the on-board energy storage. The energy storage management system may be attached to the energy storage and may transmit the actual energy level (e.g., SOC of the traction battery), the required energy level, the temperature, and further characteristic values of the on-board energy storage to the energy controller via a wired or a wireless network connection. Alternatively, the energy storage management system may be incorporated in the energy controller.

According to the herein described subject matter, there is proposed a rail vehicle which may include a traction system for driving and braking the rail vehicle. The traction system may comprise at least one traction inverter, at least one traction motor and at least one gearbox. The traction motor may be able to operate as generator, in order to transform kinetic energy of the rail vehicle into electric energy. Additionally, the traction system may include a traction controller, which may execute the traction and braking demands received from the rail vehicle controller. It may also possible that the traction controller is located remote from the traction system in the rail vehicle.

The rail vehicle may further comprise a high-voltage system for providing line current to the traction system of the rail vehicle. The high voltage system may include at least one current collector, at least one line circuit breaker, at least one main transformer and at least one line converter. The high-voltage system may further comprise a high-voltage controller, which may control and monitor the high-voltage components of the high-voltage system such that line current reference value determined by the energy controller is achieved. Instead of incorporating the high-voltage controller in the high-voltage system, it can also be located remote from the high-voltage system in the rail vehicle.

Additionally, the rail vehicle may comprise the above-described on-board energy storage system (OBESS). The OBESS may provide energy stored in an on-board energy storage to the traction system of the rail vehicle and may store energy recovered from the traction system of the rail vehicle in the on-board energy storage.

According to the herein described subject matter, there is proposed a computer program product storable in a memory comprising instructions which, when carried out by a computer, causes the computer to perform the method described above.

Summarizing, the disclosed subject matter allows for reducing the size and the mass of the high-voltage system of a dual-mode rail vehicle by smartly using the energy provided by the on-board energy storage on electrified route sections. The energy controller of the on-board energy storage system (OBESS) controls the energy supply to the on-board energy storage such that a constant energy level is maintained when the rail vehicle is operated on electrified route sections. This means that only the energy required to achieve the desired energy level needs to be provided by the high-voltage AC line supply, resulting in a reduction in the size of the rail vehicle's high-voltage equipment.

In the following the claimed subject matter will be further explained based on at least one preferential example with reference to the attached drawings, wherein:
- Figure 1: depicts schematically a structure of the power supply systems and the traction systems of the dual-mode rail vehicle;
- Figure 2: depicts schematically the structure of the on-board energy storage system (OBESS);
- Figure 3a - 3e: depict schematically the energy flow in the dual-mode rail vehicle in different driving situations;
- Figure 4: depicts an example of a charging curve of the traction battery in the dual-mode rail vehicle;
- Figure 5: depicts schematically the structure of the claimed control method; and
- Figure 6: depicts an exemplary comparison of current flow from the high-voltage AC line supply with and without using the claimed control method.

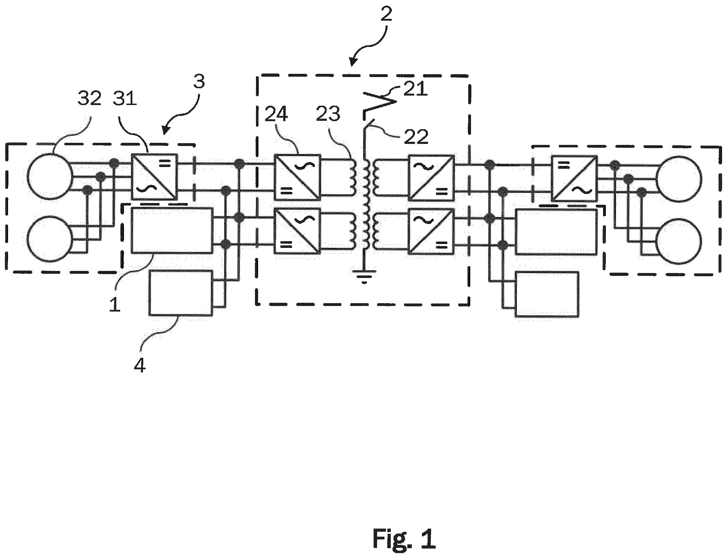

Figure 1 shows schematically a structure of the propulsion system of the dual-mode rail vehicle. The dual-mode rail vehicle may be a rail vehicle equipped with an AC line supplied traction system 3 and an on-board energy storage 14 connected to the traction system 3 which enables operation on non-electrified route sections. Accordingly, the propulsion system of said rail vehicle may comprise an on-board energy storage system (OBESS) 1 and a high-voltage system 2 for supplying power to the traction system 3. In addition, an auxiliary power supply 4 may be provided.

The high-voltage system may convert the high-voltage AC line current (e.g., 15/25/50kV at 16%Hz, 50Hz or 60Hz) to a DC voltage in the manageable range as DC power source to the traction system 3, wherein power flow can be in both directions. The schematically depicted high-voltage system 2 includes a current collector 21, a circuit breaker 22 as well as several main transformers 23 and line converters 24 for performing the current conversion. The depicted high-voltage system 2 is electrically connected to the traction motors 32 of the traction system 3 via traction converters 31. The traction system 3 may manage the conversion between the electrical power DC power source (DC-link, not depicted) and the tractive/braking effort on the rail.

Furthermore, the depicted high-voltage system 2 is electrically connected to the OBESS 1 and the auxiliary power supply 4. The auxiliary power supply 4 may provide the rail vehicle with medium voltage supply (e.g., 3x400VAC) and low voltage supply (e.g., 110VDC), in order to operate its various equipment such as control devices, signaling, electric doors, monitors and lighting equipment.

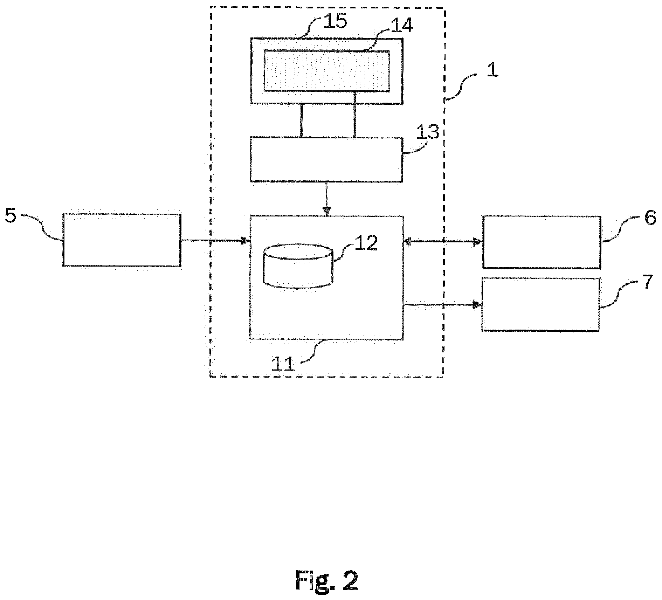

The OBESS 1 may include the on-board energy storage 14 connected to the traction system 3 to receive and store or supply and release energy. In the following, the OBESS 1 is described in detail in connection with Figure 2, which schematically shows its structure.

The depicted OBESS 1 includes an energy controller 11 with a parameter database 12, in which characteristic parameters and maps such as mass of the rail vehicle, rated and maximum line current, target energy value and recoverable energy may be stored. In the depicted example, the parameter database is included in the energy controller 11 but it may also be possible that the parameter database 12 is located remote from the energy controller 11 in the rail vehicle. In this case, the parameter database 12 may be connected to the energy controller 11 via a wireless or wired network connection.

The depicted OBESS 1 further comprises the on-board energy storage 14 equipped with a cooling system 15, wherein the on-board energy storage 14 and the cooling system 15 are electrically connected to an energy storage management system 13.

The on-board energy storage 14 may be, e.g., a traction battery including battery cells packed in modules. The cooling system 15 may maintain the desired thermal condition of the on-board energy storage 14 by cooling and heating it accordingly. The energy storage management system 13 in turn may monitor/manage/control the on-board energy storage 14 and the cooling system 15 such that the required energy level and temperature of the on-board energy storage 14 is ensured. In the depicted example the energy storage management system 13 is arranged separately in the OBESS 1. However, it may also be attached to the on-board energy storage 14 or included in the energy controller 11.

The depicted energy controller 11 is electrically connected to a rail vehicle controller 5, a high-voltage controller 6 and a traction controller 7. The electric connection of the different controllers 5, 6, 7 may be designed as a wired or a wireless network connection. The rail vehicle controller 5 may be arranged remote from the energy controller 11 in the rail vehicle. It may also be possible that the rail vehicle controller 5 is arranged in the OBESS 1 or integrated into the energy controller 11. Although not shown in Figure 2, the high-voltage controller 6 may be included in the high-voltage system 2 and the traction controller 7 may be included in the traction system 3. Alternatively, the high-voltage controller 6 and the traction controller 7 may be arranged separately in the rail vehicle or may be included in the OBESS 1. The high-voltage controller 6 may control and monitor the high-voltage components 21 to 24 of the high-voltage system 2 and the traction controller 7 may execute the traction and braking demands received from the rail vehicle controller 5.

The energy controller 11 may also contain supervision and protection for scenarios where the present output traction power needs to be reduced. This can be the case when the energy storage management system 13 reports either high temperatures of the battery cells or reduction of charge current for other reasons (e.g., cell balancing). In such cases it may be necessary to lower the traction current by the energy controller 11.

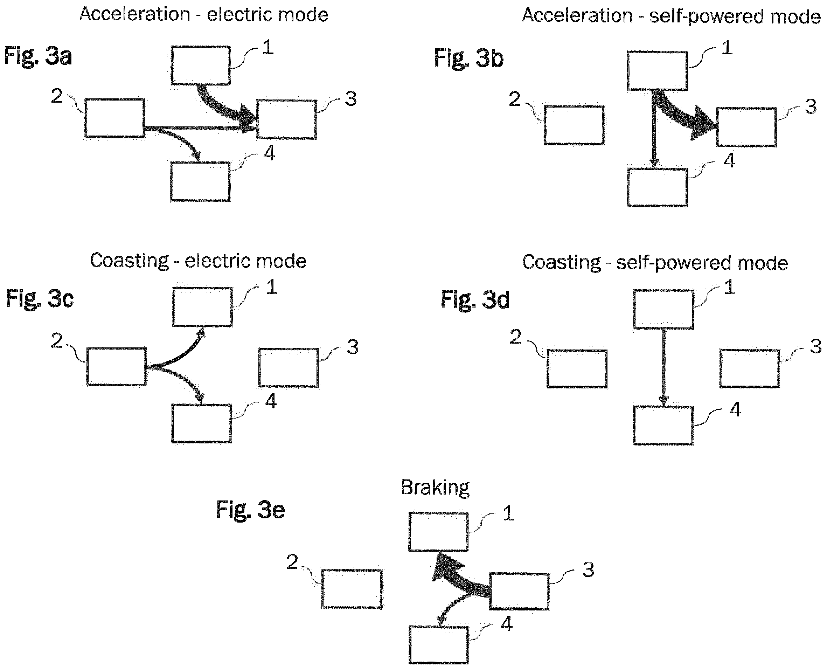

In the Figures 3a to 3e the energy flow in the claimed dual-mode rail vehicle is illustrated for different driving situations. For acceleration and coasting processes, a distinction is made between an electric mode and a self-powered mode in the Figs. 3a, 3b and 3c, 3d, respectively. In this context, electric mode means that the rail vehicle is operated on an electrified route section and self-powered mode means that the rail vehicle is operated on a non-electrified route section.

As illustrated in Fig. 3a, the traction system 3 of the claimed dual-mode rail vehicle receives the main part of the traction energy for acceleration from the on-board energy storage 14 of the OBESS 1, even when the rail vehicle is operated on an electrified route section (cf. bold arrow from OBESS 1 to traction system 3 in Fig. 3a). The high-voltage system 2 only supplies the energy necessary to maintain the required energy level of the on-board energy storage 14 (cf. thin arrow from high-voltage system 2 to traction system 3 in Fig. 3a) and the energy necessary for providing an auxiliary power supply 4 (cf. thin arrow from high-voltage system 2 to auxiliary power supply 4 in Fig. 3a). This allows smaller components to be used in the high-voltage system 2, so that its weight can be reduced.

When the rail vehicle is operated on a non-electrified route section, the complete traction energy for acceleration, and the energy necessary for supplying the auxiliary power supply 4 is provided by the on-board energy storage 14 of the OBESS 1 (cf. arrows from OBESS 1 to traction system 3 and auxiliary power supply 4 in Fig. 3b).

During coasting operation on electrified route sections, the on-board energy storage 14 of the OBESS 1 and the auxiliary power supply 4 only draw the energy to maintain their energy level from the high-voltage system 2 (cf. thin arrows from high-voltage system 2 to OBESS 1 and auxiliary power supply 4 in Fig. 3c). On non-electrified routes the on-board energy storage 14 of the OBESS 1 provides the energy needed for the auxiliary power supply 4 (cf. thin arrow from OBESS 1 to auxiliary power supply 4 in Fig. 3d).

However, the energy regenerated/recovered during electric braking of the rail vehicle is always supplied to the on-board energy storage 14 of the OBESS 1 regardless of whether the rail vehicle is operated on electrified or non-electrified route sections (cf. bold arrow from traction system 3 to OBESS 1 in Fig. 3e). At the same time, a small part of the recovered energy is delivered to the auxiliary power supply (cf. thin arrow from traction system 3 to auxiliary power supply 4 in Fig. 3e). This means, that no recovered energy is fed into the high-voltage AC line, which enables a further reduction/simplification of the components used in the high-voltage system 2 of the rail vehicle.

In the cases the rail vehicle makes longer stops such as at terminals or interchange stations where access to external electrical charging is available, an electrical connection is made to the external electrical supply and the on-board energy storage 14 is charged.

The preferred connection is to use the high-voltage system 2 including its current collector 21 to convert the external supply to the DC power source, from which the on-board energy storage 14 of the OBESS 1 can be charged.

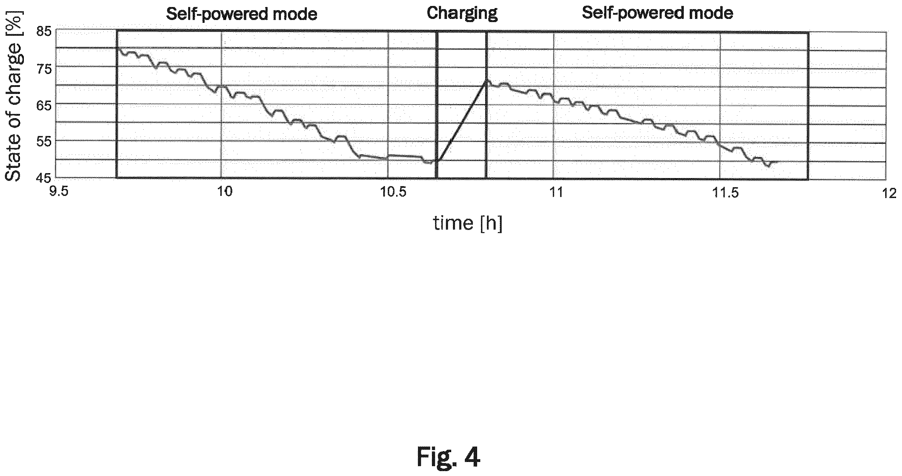

Figure 4 depicts an example of a charging curve of a traction battery in a dual-mode rail vehicle when operating on non-electrified route sections. During a one-hour drive on a non-electrified route section, the state of charge (SOC) of the traction battery is reduced from 80% to 50%. After a charging time of approximately eight minutes the SOC has increased to 70% so that the rail vehicle can be operated for another hour on a non-electrified route section.

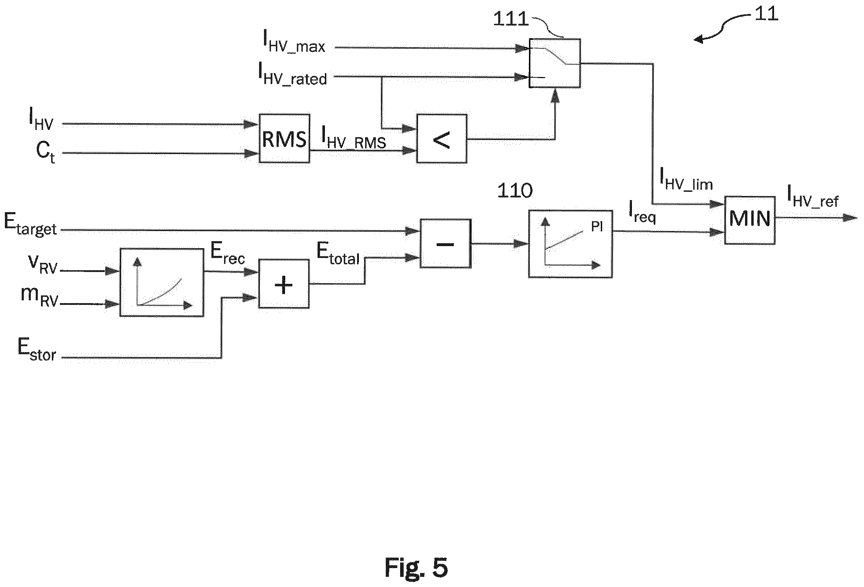

Figure 5 depicts schematically the structure of the claimed control method carried out by the energy controller 11 when the rail vehicle is operated on electrified route sections. In this case, the main function of the energy controller 11 is to maintain the balance between recoverable energy in form of kinetic movement of the train and the energy stored in the on-board energy storage 14 and to reach/maintain its desired energy level (target energy value E_{target}).

The energy controller 11 calculates a line current reference value I_{Hv_ref} being a minimum of the determined line current I_{req} required to reach/maintain the target energy value E_{target}, and the current limit I_{HV}_ₗᵢₘ defined by the high voltage system 2.

The target energy value E_{target} is the desired energy level in the on-board energy storage 14 once the rail vehicle comes to a stop. The required line current I_{req} is determined/controlled by a controller 110, e.g., a PI controller, which uses a difference between the target energy value E_{target} and a total energy value Eₜₒₜₐₗ as input value. This means that when the target energy value E_{target} is higher than the actual energy level of the rail vehicle (total energy value Eₜₒₜₐₗ), the controlled 110 will strive to increase the line current I_{req} required from the high-voltage AC line supply.

The total energy value Etotai is a sum consisting of the energy Eₛₜₒᵣ stored in the on-board energy storage 14 plus the energy E_{rec} that can be regenerated/recovered during braking of the rail vehicle. The recoverable energy E_{rec} is based on the kinetic energy of the rail vehicle and can thus be calculated via the mass m_{RV} and the velocity V_{RV} of the rail vehicle, taking into account the conversion losses. The amount of recoverable energy E_{rec} for different velocities V_{RV} may be determined in advance and stored in a respective map, in order to reduce the calculation effort of the energy controller 11. In case Eₛₜₒᵣ is equal to E_{target} when the rail vehicle starts on an electrified route section, the line current I_{req} required from the high-voltage AC supply may cover only the energy consumption that cannot be recovered during electric braking.

In order to protect its components from damage, the current transferred via the high-voltage system 2 has to be limited. Therefore, the required line current I_{ref} may be limited to the maximum current I_{HV_may} or the rated current I_{HV}__{rated} of the high-voltage system 2. As long as the floating RMS value of the present current I_{HV_RMS} is lower than the rated current, I_{req} may be limited to I_{Hv}_ₘₐₓ. However, if I_{HV}__{RMS} exceeds the rated current I_{HV}__{rated}, I_{req} may be limited to the rated current I_{HV}__{rated} through a switch 111. The floating RMS current value I_{HV_RMS} may be determined by integrating the present AC line current I_{HV} using a predetermined time constant Ct. The predetermined time constant may preferably be in a range of 10 min to 30 min.

The above-described limitation allows the high voltage system to even charge up to its maximum current during short periods, in order to quickly increase the actual energy state of the on-board energy storage if needed. A typical scenario for this is when the rail vehicle has been operating on non-electrified route sections and after this enters an electrified route section. In such situation I_{HV_RMS} is expected to be significantly lower than I_{HV_rated}, because line current has not been used for a long time.

In another embodiment, instead of monitoring the floating RMS current value I_{HV_RMS}, thermal condition T_{HV} (not depicted) of high-voltage system 2 is also able to be utilized in order to limit the required line current I_{ref} to either the maximum current I_{HV_max} or the rated current I_{HV_rated.}As long as the T_{HV} value of the present temperature stays in lower level than a certain value T_{rated} (not depicted) associated with the temperature realized while the rated current I_{HV}__{rated} is given to high-voltage system 2,I_{req} may be limited to I_{HV_max}. However, if T_{HV} exceeds the T_{rated}, I_{req} may be limited to the rated current I_{HV_rated} or lower through the switch 111. Those thermal related parameters may vary with outside/peripheral temperature or vehicle velocity, therefore a combination map, which may comprise T_{HV}, I_{HV}, T_{rated}, outside temperature and vehicle velocity, may be determined in advance and stored in the parameter database as well.

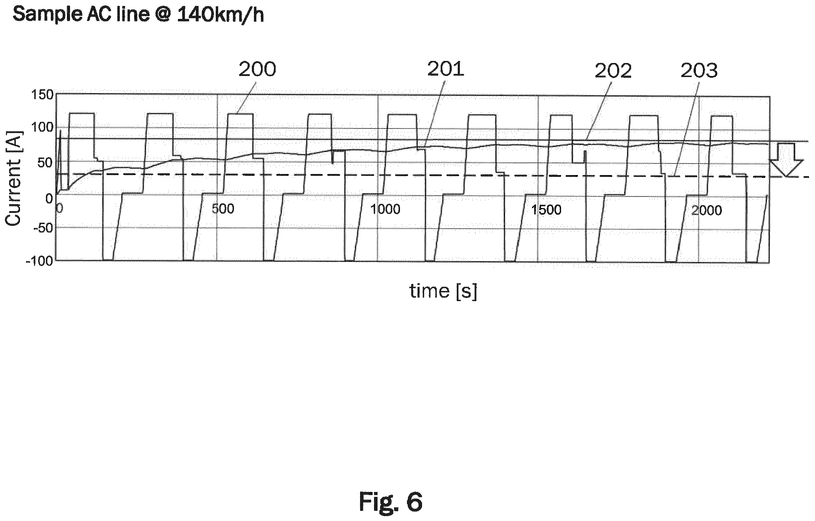

Figure 6 depicts an exemplary comparison of current flow from a high-voltage AC line supply having a voltage of 15 kV with and without application of the claimed control method when the dual-mode rail vehicle is operated with a velocity of 140 km/h for about 40 min. The line 200 shows the AC current the rail vehicle exchanges with the overhead line if the claimed method is not applied. Accordingly, the line 201 illustrates the floating RMS current and the line 202 illustrates the total RMS current, which gives in the present case a current of 83.6 Arms. However, in case the claimed method is applied and the on-board energy storage 14 is used as buffer for the recoverable energy, the need to exchange energy with the overhead line is reduced dramatically. The rail vehicle can in this case manage exactly the same performance with only 31.2 Arms of total RMS current (cf. line 203 depicted in Fig. 6). This means that the high voltage equipment can be downsized significantly which saves space, weight, and investments.

Summarizing, the present disclosure provides an on-board energy storage system (OBESS) 1 with an energy controller 11 which enables to reduce the size and the complexity of the high-voltage system of a dual-mode rail vehicle by smartly using the energy provided by the on-board energy storage 14 on electrified route sections. The energy controller 11 controls the energy supply to the on-board energy storage such that a constant energy level is maintained when the rail vehicle is operated on electrified route sections. This means that only the energy required to achieve the desired energy level needs to be provided by the high-voltage AC line supply, resulting in a reduction in the size of the rail vehicle's high-voltage equipment.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, e.g., but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different embodiments or aspects described herein may be combined to form other embodiments.

### Reference sign list

- 1: On-board energy storage system (OBESS)
- 11: Energy storage controller
- 110: controller
- 111: switch
- 12: Parameter database
- 13: Energy storage management system
- 14: On-board energy storage
- 15: Cooling system
- 2: High-voltage system
- 21: Current collector
- 22: Line circuit breaker
- 23: Main transformer
- 24: Line converter
- 3: Traction system
- 31: Traction inverter
- 32: Traction motor
- 4: Auxiliary power supply
- 5: Rail vehicle controller
- 6: High-voltage controller
- 7: Traction controller
- 200: Line current w/o application of claimed method
- 201: Floating RMS current w/o application of claimed method
- 202: Total RMS current w/o application of claimed method
- 203: Total RMS current w/ application of claimed method

## Claims

1. Method for controlling an on-board energy storage system (1) of a rail vehicle by an energy controller (11), the method comprising the steps of
- determining a present value of recoverable energy based on a mass and a velocity of the rail vehicle,
- receiving, from an energy storage management system (13), a present value of an energy stored in at least one on-board energy storage (14),
- adding the present values of recoverable energy and stored energy to determine a total energy value,
- comparing the total energy value with a target energy value,
- determining a required line current from a high-voltage AC line supply depending on the difference between the target energy value and the total energy value,
- transmitting a minimum value from the determined required line current and a predetermined maximum line current as line current reference value to a high-voltage system controller (6), and
- controlling, by a high-voltage controller, a line current from the high-voltage AC line supply to a traction system of the rail vehicle according to the line current reference value.

2. The method according to claim 1, wherein
the required line current is determined using a controller, wherein the difference between the target energy value and the total energy value is used as input value of the controller and the required line current is determined using a transfer function of the controller.

3. The method according to the claims 1 or 2, wherein
the present value of recoverable energy based on the mass and the velocity of the rail vehicle is read out from a characteristic map, which is determined in advance and stored in a parameter database (12).

4. The method according to at least one of the preceding claims, wherein
if a floating root mean square value of the line current exceeds a first predetermined line current maximum value,
the predetermined line current maximum value is set to the first predetermined line current maximum value, else the predetermined line current maximum value is set to a second predetermined line current maximum value.

5. The method according to claim 4, wherein
the second predetermined line current maximum value is higher than the first predetermined line current maximum value.

6. The method according to claim 4 or 5, wherein
the floating root mean square value of the line current is continuously calculated by the energy controller(11).

7. The method according to at least one of the preceding claims, wherein
energy recovered during braking of the rail vehicle is stored in at least one on-board energy storage (14).

8. An energy controller (11) for controlling an on-board energy storage system of a rail vehicle, wherein the controller (11) is configured to
receive input parameters from a parameter database (12), an energy storage management system (13), a rail vehicle controller (5), a high-voltage controller (6) and a traction controller (7), and
perform the method according to at least one of the claims 1 to 7.

9. An on-board energy storage system (1) including
a controller (11) according to claim 8,
at least one on-board energy storage (14) configured to store energy;
at least one cooling system (15) configured to maintain a required thermal state of the on-board energy storage (14); and
an energy storage management system (13) configured to monitor an energy level and the thermal state of the on-board energy storage (14).

10. A rail vehicle including
a traction system (3) comprising at least one traction inverter (31), at least one traction motor (32) and at least one gearbox, the traction system (3) configured to drive and brake the rail vehicle;
a high-voltage system (2) comprising at least one current collector (21), at least one line circuit breaker (22), at least one main transformer (23) and at least one line converter (24), the high-voltage system (2) configured to provide line current to the traction system (3) of the rail vehicle; and
an on-board energy storage system (1) according to claim 9 configured to provide stored energy to the traction system (3) of the rail vehicle and store energy recuperated from the traction system (3) of the rail vehicle.

11. A computer program product storable in a memory comprising instructions which, when carried out by a computer, causes the computer to perform the method according to at least one of the previous claims 1 to 7.
